(19) **Europäisches Patentamt**
**European Patent Office**
**Office européen des brevets**

(11) **EP 2 803 135 B1**

(12) **FASCICULE DE BREVET EUROPEEN**

(45) Date de publication et mention
de la délivrance du brevet:
**14.08.2019 Bulletin 2019/33**

(51) Int Cl.:
***H02P 5/74*** (2006.01)      ***H02P 6/18*** (2016.01)
***H02P 6/20*** (2016.01)

(21) Numéro de dépôt: **13700033.7**

(22) Date de dépôt: **07.01.2013**

(86) Numéro de dépôt international:
**PCT/EP2013/050151**

(87) Numéro de publication internationale:
**WO 2013/104582 (18.07.2013 Gazette 2013/29)**

(54) **PROCÉDÉ DE COMMANDE MIS EN UVRE POUR COMMANDER DEUX MOTEURS ÉLECTRIQUES SYNCHRONES À AIMANT PERMANENT CONNECTÉS EN PARALLÈLE**

STEUERVERFAHREN, ZUR STEUERUNG ZWEIER ELEKTRISCHER PERMANENTMAGNET-SYNCHRONMOTOREN IN PARALLELSCHALTUNG

METHOD OF CONTROL IMPLEMENTED FOR CONTROLLING TWO PERMANENT-MAGNET SYNCHRONOUS ELECTRIC MOTORS CONNECTED IN PARALLEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2012 FR 1250190**

(43) Date de publication de la demande:
**19.11.2014 Bulletin 2014/47**

(73) Titulaire: **Schneider Toshiba Inverter Europe SAS**
**27120 Pacy sur Eure (FR)**

(72) Inventeurs:
• **MALRAIT, François**
**F-27120 Jouy sur Eure (FR)**
• **DEVOS, Thomas**
**F-78955 Carrières sous Poissy (FR)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**

(56) Documents cités:
**JP-A- 11 235 078          JP-A- 2007 325 406**
**JP-A- 2008 206 290       US-A1- 2004 257 030**
**US-A1- 2010 225 262**

**Description**

**Domaine technique de l'invention**

La présente invention se rapporte à un procédé de commande mis en oeuvre dans un convertisseur de puissance pour commander deux moteurs synchrones à aimant permanent connectés en parallèle audit convertisseur de puissance.
L'invention concerne également le convertisseur de puissance qui permet de mettre en oeuvre ce procédé.

**Etat de la technique**

De manière connue, un convertisseur de puissance de type variateur de vitesse est connecté en amont à un réseau électrique et permet de commander un moteur électrique. Un variateur de vitesse comporte :

- en entrée, un module redresseur composé en règle générale d'un pont de diodes destiné à redresser la tension alternative fournie par le réseau électrique,

- un bus continu d'alimentation sur lequel est appliquée la tension redressée par le module redresseur, le bus continu d'alimentation étant doté d'un condensateur de bus permettant de maintenir la tension du bus à une valeur constante,

- en sortie, un module onduleur destiné à transformer la tension du bus continu en une tension variable à appliquer au moteur électrique.

Pour certaines applications, la sortie d'un variateur de vitesse peut être connectée à deux moteurs électriques distincts. Le même variateur de vitesse est donc employé pour commander les deux moteurs électriques connectés en parallèle. Si les moteurs électriques sont de type synchrone à aimant permanent, la commande en parallèle des deux moteurs, par un même variateur de vitesse, ne peut se faire qu'après un alignement des rotors des deux moteurs synchrones. Pour effectuer cet alignement, il est connu de connecter le variateur de vitesse à un seul moteur électrique synchrone à la fois. Le variateur de vitesse est d'abord connecté au premier moteur électrique synchrone et applique une tension à ce premier moteur électrique pour aligner son rotor sur un axe déterminé. Puis le premier moteur électrique synchrone est déconnecté du variateur de vitesse et le deuxième moteur électrique synchrone est connecté au variateur de vitesse. Le variateur de vitesse est commandé pour appliquer une tension d'alimentation déterminée au deuxième moteur électrique synchrone afin d'aligner son rotor sur le même axe que celui du premier moteur électrique synchrone.
Cette méthode d'alignement est contraignante à mettre en oeuvre car elle nécessite la mise en place d'une séquence de commande précise de connexion et de déconnexion de chaque moteur électrique.
Le document JP2008206290 décrit une méthode pour commander plusieurs moteurs « brushless » connectés en parallèle.
Le but de l'invention est de proposer un procédé de commande mis en oeuvre dans un variateur de vitesse permettant d'éviter de connecter de manière indépendante chaque moteur électrique synchrone au variateur de vitesse.

**Exposé de l'invention**

Ce but est atteint par un procédé de commande mis en oeuvre dans un convertisseur de puissance qui comporte une sortie connectée à deux moteurs électriques synchrones à aimant permanent en parallèle, ledit convertisseur de puissance étant commandé pour appliquer une tension d'alimentation sur sa sortie, chaque moteur électrique synchrone à aimant permanent comportant un stator et un rotor, le procédé de commande comportant :

- une étape d'application d'un signal de tension à haute fréquence, sans générer de couple, c'est-à-dire sans occasionner un déplacement de leur rotor, sur les moteurs électriques synchrones à aimant permanent, selon au moins un axe dans un repère fixe, entraînant des oscillations du courant sur la sortie du convertisseur de puissance,
- une étape de mesure des oscillations du courant obtenues sur la sortie du convertisseur de puissance,
- une étape de détermination pour déterminer l'angle du rotor du premier moteur électrique synchrone à aimant permanent et l'angle du rotor du deuxième moteur électrique synchrone à aimant permanent à partir des oscillations du courant mesuré.

Selon une particularité, l'étape de détermination de l'angle du rotor du premier moteur électrique synchrone à aimant permanent est mise en oeuvre en tenant compte des paramètres du premier moteur électrique synchrone (Mot1) à aimant permanent.

Selon une autre particularité, l'étape de détermination de l'angle du rotor du deuxième moteur électrique synchrone à aimant permanent est mise en oeuvre en tenant compte des paramètres du deuxième moteur électrique synchrone à aimant permanent.

Selon une autre particularité, l'angle du rotor du premier moteur électrique synchrone à aimant permanent et l'angle du rotor du deuxième moteur électrique synchrone à aimant permanent sont déterminés à partir des relations suivantes :

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2}$$
$$+ l_{mot2} \cdot e^{j\theta_2} + m_{mot2} \cdot e^{j3\theta_2}$$

dans lesquelles :

$$g = \frac{\Omega \cdot \tilde{i}_S}{e^{j\alpha} \cdot \tilde{u}}$$

$$n = \frac{4 \cdot \Omega^2 \cdot \tilde{\tilde{i}}_S}{e^{j2\alpha} \cdot \tilde{u}_S^{\,2}}$$

- $g_{mot1}$, $h_{mot1}$, $k_{mot1}$, $l_{mot1}$, $m_{mot1}$ sont des constantes qui sont fonction des paramètres du premier moteur électrique synchrone à aimant permanent,
- $g_{mot2}$, $h_{mot2}$, $k_{mot2}$, $l_{mot2}$, $m_{mot2}$ sont des constantes qui sont fonction des paramètres du deuxième moteur électrique synchrone à aimant permanent,
- $\tilde{i}_S$ représente les oscillations du courant obtenues au premier ordre,
- $\tilde{\tilde{i}}_S$ représente les oscillations du courant obtenues au deuxième ordre,
- $\alpha$ représente l'angle formé par l'axe de l'injection dans le repère fixe,
- $\Omega$ représente la fréquence du signal de tension à haute fréquence qui est appliqué,
- $\tilde{u}$ représente l'amplitude de l'injection du signal de tension à haute fréquence et
- $\tilde{u}_S = e^{j\alpha} \cdot \tilde{u}$

Selon une autre particularité, le procédé comporte une étape d'alignement des rotors selon une stratégie déterminée, mémorisée dans le convertisseur de puissance.

Selon une autre particularité, l'étape d'alignement est mise en oeuvre en tenant compte de l'inertie du premier moteur électrique synchrone à aimant permanent et de l'inertie du deuxième moteur électrique synchrone à aimant permanent.

L'invention concerne également un convertisseur de puissance comportant une sortie destinée à être connectée à deux moteurs électriques synchrones à aimant permanent en parallèle, ledit convertisseur de puissance étant commandé pour appliquer une tension d'alimentation sur sa sortie, chaque moteur électrique synchrone à aimant permanent comportant un stator et un rotor, le convertisseur comportant :

- des moyens d'application d'un signal de tension à haute fréquence, sans générer de couple, c'est-à-dire sans occasionner de déplacement de leur rotor, sur les deux moteurs électriques synchrones à aimant permanent, selon au moins un axe dans un repère fixe, entraînant des oscillations du courant sur la sortie du convertisseur de puissance,
- des moyens de mesure des oscillations du courant obtenues sur la sortie du convertisseur de puissance,
- des moyens de détermination activés pour déterminer l'angle du rotor du premier moteur électrique synchrone à aimant permanent et l'angle du rotor du deuxième moteur électrique synchrone à aimant permanent à partir des oscillations du courant mesuré.

Selon une particularité, les moyens de détermination sont activés pour déterminer l'angle du rotor du premier moteur électrique synchrone à aimant permanent en tenant compte des paramètres du premier moteur électrique synchrone à aimant permanent.

Selon une autre particularité, les moyens de détermination sont activés pour déterminer l'angle du rotor du deuxième moteur électrique synchrone à aimant permanent en tenant compte des paramètres du deuxième moteur électrique synchrone à aimant permanent.

Selon une autre particularité, l'angle du rotor du premier moteur électrique synchrone à aimant permanent et l'angle du rotor du deuxième moteur électrique synchrone à aimant permanent sont déterminés à partir des relations suivantes :

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2} + l_{mot2} \cdot e^{j\theta_2} + m_{mot2} \cdot e^{j3\theta_2}$$

dans lesquels :

$$g = \frac{\Omega \cdot \tilde{i}_S}{e^{j\alpha} \cdot \tilde{u}}$$

$$n = \frac{4 \cdot \Omega^2 \cdot \tilde{\tilde{i}}_S}{e^{j2\alpha} \cdot \tilde{u}_S^{\;2}}$$

- $g_{mot1}$, $h_{mot1}$, $k_{mot1}$, $l_{mot1}$, $m_{mot1}$ sont des constantes qui sont fonction des paramètres du premier moteur électrique synchrone à aimant permanent,
- $g_{mot2}$, $h_{mot2}$, $k_{mot2}$, $l_{mot2}$, $m_{mot2}$ sont des constantes qui sont fonction des paramètres du deuxième moteur électrique synchrone à aimant permanent,
- $\tilde{i}_S$ représente les oscillations du courant obtenues au premier ordre,
- $\tilde{\tilde{i}}_S$ représente les oscillations du courant obtenues au deuxième ordre,
- $\alpha$ représente l'angle formé par l'axe de l'injection dans le repère fixe,
- $\Omega$ représente la fréquence du signal de tension à haute fréquence qui est appliqué,
- $\tilde{u}$ représente l'amplitude de l'injection du signal de tension à haute fréquence et
- $\tilde{u}_S = e^{j\alpha} \cdot \tilde{u}$

Selon une autre particularité, le convertisseur comporte des moyens d'alignement des rotors selon une stratégie déterminée mémorisée dans le convertisseur de puissance.

Selon une autre particularité, les moyens d'alignement comportent des moyens de détermination d'une stratégie d'alignement tenant compte de l'inertie du premier moteur électrique synchrone à aimant permanent et de l'inertie du deuxième moteur électrique synchrone à aimant permanent.

**Brève description des figures**

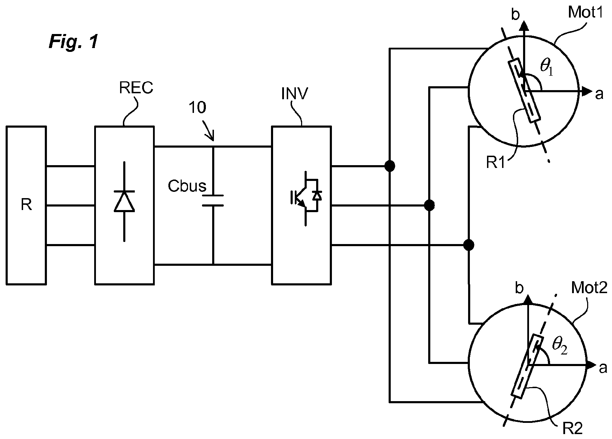

D'autres caractéristiques et avantages vont apparaître dans la description détaillée qui suit faite en regard de la figure 1 montrant un convertisseur de puissance de type variateur de vitesse et deux moteurs électriques synchrones connectés en parallèle audit convertisseur de puissance.

**Description détaillée d'au moins un mode de réalisation**

L'invention s'applique à un convertisseur de puissance comportant au moins un module onduleur alimenté par une source de tension continue et comportant une sortie connectée en parallèle à deux moteurs électriques synchrones Mot1, Mot2 à aimant permanent (PMSM pour Permanet Magnet Synchronous Motor - désignés chacun ci-après moteur électrique synchrone).

L'invention s'applique plus particulièrement à un convertisseur de puissance de type variateur de vitesse. De manière connue, un convertisseur de puissance de type variateur de vitesse est connecté en amont à un réseau électrique R et en aval à au moins un moteur électrique.

Un variateur de vitesse comporte :

- en entrée, un module redresseur REC composé en règle générale d'un pont de diodes destiné à redresser la tension alternative fournie par le réseau électrique R,

- un bus continu d'alimentation 10 sur lequel est appliquée la tension redressée par le module redresseur, le bus continu d'alimentation étant doté d'un condensateur de bus Cbus permettant de maintenir la tension du bus à une valeur constante,

- en sortie, un module onduleur INV destiné à transformer la tension du bus continu en une tension variable à appliquer au moteur électrique.

Le module onduleur INV est commandé en employant une loi de commande déterminée exécutée par des moyens de commande. La loi de commande consiste à calculer les tensions à appliquer au moteur électrique en fonction d'une consigne de vitesse statorique.

Le procédé de commande de l'invention est mis en oeuvre dans un variateur de vitesse pour commander les deux moteurs électriques synchrones Mot1, Mot2 qui sont connectés en parallèle à la sortie du variateur de vitesse.

Selon l'invention, pour commander deux moteurs électriques synchrones Mot1, Mot2 en parallèle et leur envoyer les mêmes tensions de commande, il est nécessaire d'aligner préalablement les deux rotors R1, R2 des deux moteurs. Le procédé de commande de l'invention est employé pour permettre de réaliser cet alignement. Cependant, pour aligner les deux rotors R1, R2, il est nécessaire de connaître leur position respective. Le procédé de commande de l'invention permet ainsi, lors d'une phase préalable d'apprentissage, de déterminer l'angle $\theta_1$ du rotor R1 du premier moteur électrique synchrone Mot1 et l'angle $\theta_2$ du rotor R2 du deuxième moteur électrique synchrone Mot2. Le procédé de commande de l'invention est mis en oeuvre en envoyant des signaux de tension en parallèle dans les deux moteurs électriques synchrones Mot1, Mot2.

La démonstration qui suit montre qu'il est possible de déterminer les angles $\theta_1$, $\theta_2$ des deux rotors R1, R2 en maintenant la sortie du variateur de vitesse connectée aux deux moteurs électriques synchrones.

Sous une approche Hamiltonienne, un modèle mathématique du moteur électrique synchrone à aimant permanent, incluant le phénomène de saturation magnétique, suit par exemple l'expression suivante :

$$H_{mS}(\psi_{Sd}, \psi_{Sq}) = \frac{\psi_{Sd}^2}{2 \cdot L_d} + \frac{\psi_{Sq}^2}{2 \cdot L_q} + \frac{s}{L_d \cdot L_q} \cdot \psi_{Sd}\psi_{Sq}^2 \qquad (1)$$

Dans laquelle :

$\psi_S$ : écriture complexe du flux de fuite stator $\psi_{Sd} + j \cdot \psi_{Sq}$
$\psi_{Sd}$ : flux de fuite stator d'axe d
$\psi_{Sq}$ : flux de fuite stator d'axe q
$L_d$ : inductance d'axe d
$L_q$ : inductance d'axe q
$s$ : le coefficient de saturation magnétique

En considérant qu'un seul moteur électrique synchrone est connecté au variateur de vitesse, il est possible de déterminer l'angle $\theta$ de son rotor en injectant un signal de tension à haute fréquence. Cette injection en tension est réalisée sans générer de couple, c'est-à-dire sans occasionner un déplacement du rotor. L'injection haute fréquence permet une mesure en courant qui fournit une image de la position du rotor du moteur électrique synchrone.

L'injection d'un signal de tension à haute fréquence dans le repère (a, b) fixe lié au stator, s'exprime de la manière suivante :

$$u_{Sab} = \tilde{u}_S \cdot f(\Omega \cdot t)$$

où $\tilde{u}_S$ est une amplitude complexe et représente la partie haute fréquence, f est une fonction périodique de moyenne nulle (de période $1/\Omega$ et d'amplitude 1) et F sa primitive centrée.

La fonction f peut prendre par exemple la forme d'un signal carré ou d'un signal sinusoïdal.

Dans la solution proposée, la tension $U_{Sab}$ n'est composée que de ce signal haute fréquence. Sans perte de généralité, nous pourrions considérer une tension $U_{Sab}$ formée de différents signaux dont les fréquences sont suffisamment séparées, d'un facteur cinq par exemple. Un cas d'application pourrait être de considérer que cette tension est composée d'un signal constant (fréquence d'injection = 0Hz) et d'un signal haute fréquence tel que décrit ci-dessus.

En repartant du modèle du moteur défini ci-dessus, on peut obtenir les expressions des oscillations du courant statorique résultant de l'injection du signal de tension à haute fréquence.

Une oscillation du courant statorique ($\tilde{i}_{Smot}$) au premier ordre suit la relation suivante:

$$\tilde{i}_{Smot} = \frac{\lambda}{\lambda^2 - \mu^2} \cdot \frac{\tilde{u}_S}{\Omega} + \frac{\mu}{\lambda^2 - \mu^2} \cdot e^{j2\theta} \cdot \frac{\tilde{u}_S^*}{\Omega} \qquad (2)$$

Une oscillation du courant statorique $\left( \tilde{\tilde{i}}_{Smot} \right)$ au deuxième ordre suit la relation suivante :

$$\tilde{\tilde{i}}_{Smot} = \frac{1}{4} \cdot \frac{s}{\lambda^2 - \mu^2} \cdot \left( \frac{\tilde{u}_S^2}{\Omega^2} + 2 \cdot \frac{\tilde{u}_S \cdot \tilde{u}_S^*}{\Omega^2} \cdot e^{j2\theta} - 3 \cdot \frac{\tilde{u}_S^{*2}}{\Omega^2} \cdot e^{j4\theta} \right) \cdot e^{-j\theta} \qquad (3)$$

Dans lesquelles :

$$\lambda = \frac{L_d + L_q}{2} \qquad \mu = \frac{-L_d + L_q}{2}$$

$\theta$ représente l'angle du rotor du moteur électrique synchrone,

$\Omega$ représente la fréquence du signal haute fréquence injecté,

$\tilde{u}_S^*$ représente le conjugué de la tension $\tilde{u}_S$.

A partir de ces deux expressions, des paramètres du moteur et après mesure des oscillations du courant statorique au premier ordre et au deuxième ordre, il est ainsi possible pour le variateur de vitesse de déterminer l'angle $\theta$ du rotor d'un seul moteur électrique synchrone qui lui est connecté.

En considérant plus particulièrement l'injection d'un signal de tension selon l'axe a du repère fixe (a, b) lié au stator, on a :

$$\tilde{u}_S = \tilde{u}_S^*$$

On obtient alors :

$$\tilde{i}_{Smot} = \frac{\lambda + \mu \cdot e^{j2\theta}}{\lambda^2 - \mu^2} \cdot \frac{\tilde{u}_S}{\Omega}$$

$$\tilde{\tilde{i}}_{Smot} = \frac{1}{4} \cdot \frac{s}{\lambda^2 - \mu^2} \cdot \left( e^{-j\theta} + 2 \cdot e^{j\theta} - 3 \cdot e^{j3\theta} \right) \cdot \frac{\tilde{u}_S^2}{\Omega^2} \qquad (4)$$

Pour simplifier le traitement mis en oeuvre dans le variateur de vitesse, il serait également possible d'injecter trois signaux de tension à haute fréquence successifs selon trois axes, décalés entre eux de $2\pi/3$.

On obtiendrait alors :

$$\tilde{i}_{S123} = 0 \qquad\qquad \tilde{\tilde{i}}_{S123} = \frac{3}{2} \cdot \frac{s}{\lambda^2 - \mu^2} \cdot e^{j\theta} \cdot \frac{\tilde{u}^2}{\Omega^2} \qquad\qquad (5)$$

Avec $\tilde{i}_{S123}$ qui correspond à la résultante des oscillations au premier ordre du courant statorique obtenues suite aux injections successives des trois signaux de tension et $\tilde{\tilde{i}}_{S123}$ qui correspond à la résultante des oscillations au deuxième ordre du courant statorique suite aux injections successives des trois signaux de tension.

La méthode d'injection et les expressions (4) et (5) obtenues ci-dessus pour la détermination de l'angle $\theta$ du rotor pour un seul moteur électrique synchrone connecté au variateur de vitesse peuvent s'appliquer à la détermination des deux angles $\theta_1$, $\theta_2$ des rotors lorsque deux moteurs électriques synchrones sont connectés en parallèle au variateur de vitesse.

Un signal de tension à haute fréquence est injecté dans les deux moteurs électriques synchrones par le variateur de vitesse, sans générer de couple, comme si un seul moteur électrique synchrone était connecté au variateur de vitesse. Les oscillations du courant obtenues en réponse proviennent alors des deux moteurs électriques synchrones et tiennent donc compte de la position du rotor de chaque moteur électrique synchrone. L'invention consiste donc à pouvoir extraire du signal de courant mesuré la position du rotor R1 du premier moteur électrique synchrone Mot1 et la position du rotor R2 du deuxième moteur électrique synchrone Mot2.

Lorsque deux moteurs électriques synchrones Mot1, Mot2 sont connectés en sortie d'un même variateur de vitesse, les oscillations du courant au premier ordre ($\tilde{i}_S$) qui sont mesurées correspondent à la somme des oscillations du courant statorique ($\tilde{i}_{Smot1}$) au premier ordre du premier moteur électrique synchrone Mot1 et des oscillations du courant statorique ($\tilde{i}_{Smot2}$) au premier ordre du deuxième moteur électrique synchrone Mot2 et les oscillations du courant au deuxième ordre ($\tilde{\tilde{i}}_S$) qui sont mesurées correspondent à la somme des oscillations du courant statorique ($\tilde{\tilde{i}}_{Smot1}$) au deuxième ordre du premier moteur électrique synchrone et des oscillations du courant statorique ($\tilde{\tilde{i}}_{Smot2}$) au deuxième ordre du deuxième moteur électrique synchrone Mot2. Cela s'exprime par les relations suivantes :

$$\tilde{i}_S = \tilde{i}_{Smot1} + \tilde{i}_{Smot2}$$
$$\tilde{\tilde{i}}_S = \tilde{\tilde{i}}_{Smot1} + \tilde{\tilde{i}}_{Smot2} \qquad\qquad (6)$$

dans lesquelles :

- $\tilde{i}_{Smot1}$ correspond aux oscillations du courant statorique au premier ordre du premier moteur électrique synchrone Mot1,

- $\tilde{i}_{Smot2}$ correspond aux oscillations du courant statorique au premier ordre du deuxième moteur électrique synchrone Mot2,

- $\tilde{\tilde{i}}_{Smot1}$ correspond aux oscillations du courant statorique au deuxième ordre du premier moteur électrique synchrone Mot1,

- $\tilde{\tilde{i}}_{Smot2}$ correspond aux oscillations du courant statorique au deuxième ordre du deuxième moteur électrique synchrone Mot2,

Posons les notations suivantes :

$$\tilde{u}_S = e^{j\alpha} \cdot \tilde{u}$$

avec $\tilde{u}$ qui est l'amplitude (réelle) de l'injection du signal de tension à haute fréquence et $\alpha$ qui est la phase de l'injection (si l'injection du signal est réalisée sur l'axe a du repère (a, b) fixe lié au stator, alors $\alpha = 0$). Il n'y a pas de limitation sur l'amplitude de la tension injectée. Elle doit générer un signal de courant perceptible qui sera utilisé pour identifier la position des flux (donc des rotors) des deux moteurs électriques synchrones.

En reprenant les expressions générales (2) et (3) ci-dessus exprimant les oscillations du courant statorique au premier ordre et au deuxième ordre, pour un seul moteur électrique synchrone connecté au variateur de vitesse, nous obtenons les relations (7) suivantes :

$$\left(\frac{\Omega \cdot \tilde{\tilde{s}}_{mot}}{e^{j\alpha} \cdot \tilde{u}}\right) = \left(\frac{\lambda}{\lambda^2 - \mu^2}\right) + \left(\frac{\mu}{\lambda^2 - \mu^2} \cdot e^{-j2\alpha}\right) \cdot e^{j2\theta} = g_{mot} + h_{mot} \cdot e^{j2\theta}$$

$$\left(\frac{4 \cdot \Omega^2 \cdot \tilde{\tilde{s}}_{mot}}{e^{j2\alpha} \cdot \tilde{u}_S{}^2}\right) = \frac{s}{\lambda^2 - \mu^2} \cdot \left(e^{-j\theta} + 2 \cdot e^{-j2\alpha} \cdot e^{j\theta} - 3 \cdot e^{-j4\alpha} \cdot e^{j3\theta}\right) \qquad (7)$$

$$= k_{mot} \cdot e^{-j\theta} + l_{mot} \cdot e^{j\theta} + m_{mot} \cdot e^{j3\theta}$$

Dans lesquelles :

$$g_{mot} = \frac{\lambda}{\lambda^2 - \mu^2} \qquad\qquad h_{mot} = \frac{\mu}{\lambda^2 - \mu^2} \cdot e^{-j2\alpha}$$

$$k_{mot} = \frac{s}{\lambda^2 - \mu^2} \qquad\qquad l_{mot} = 2 \cdot \frac{s}{\lambda^2 - \mu^2} \cdot e^{-j2\alpha}$$

$$m_{mot} = -3 \cdot \frac{s}{\lambda^2 - \mu^2} \cdot e^{-j4\alpha}$$

A partir des relations (7) et en utilisant les indices 1 (respectivement 2) pour noter les paramètres du moteur 1 (respectivement du moteur 2), les relations (6) écrites ci-dessus peuvent ainsi être réécrites pour chaque moteur. Pour le moteur 1 :

$$g_1 = g_{mot1} + h_{mot1} \cdot e^{j2\theta_1}$$
$$n_1 = k_{mot1} \cdot e^{-j\theta_1} + l_{mot1} \cdot e^{j\theta_1} + m_{mot1} \cdot e^{j3\theta_1} \qquad (8)$$

avec :

$$g_1 = \frac{\Omega \cdot \tilde{\tilde{s}}_{mot1}}{e^{j\alpha} \cdot \tilde{u}}$$

$$n_1 = \frac{4 \cdot \Omega^2 \cdot \tilde{\tilde{s}}_{mot1}}{e^{j2\alpha} \cdot \tilde{u}_S{}^2}$$

Pour le moteur 2 :

$$g_2 = g_{mot2} + h_{mot2} \cdot e^{j2\theta_2}$$
$$n_2 = k_{mot2} \cdot e^{-j\theta_2} + l_{mot2} \cdot e^{j\theta_2} + m_{mot2} \cdot e^{j3\theta_2} \qquad (9)$$

avec :

$$g_2 = \frac{\Omega \cdot \tilde{s}_{mot2}}{e^{j\alpha} \cdot \tilde{u}}$$

$$n_2 = \frac{4 \cdot \Omega^2 \cdot \tilde{\tilde{s}}_{mot2}}{e^{j2\alpha} \cdot \tilde{u}_S{}^2}$$

Au final, à partir des expressions (6), on obtient les relations (10) et (11) ci-dessous qui permettent de déterminer l'angle $\theta_1$ du rotor R1 du premier moteur électrique synchrone Mot1 connecté au variateur de vitesse et l'angle $\theta_2$ du rotor R2 du deuxième moteur électrique synchrone Mot2 connecté au variateur de vitesse :

$$g = g_1 + g_2 = g_{mot1} + h_{mot1} \cdot e^{j2\theta_1} + g_{mot2} + h_{mot2} \cdot e^{j2\theta_2}$$
$$n = n_1 + n_2 = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2}$$
$$+ l_{mot2} \cdot e^{j\theta_2} + m_{mot2} \cdot e^{j3\theta_2}$$

avec

$$g = \frac{\Omega \cdot \tilde{s}}{e^{j\alpha} \cdot \tilde{u}}$$

$$n = \frac{4 \cdot \Omega^2 \cdot \tilde{\tilde{s}}}{e^{j2\alpha} \cdot \tilde{u}_S{}^2}$$

A partir des paramètres du premier moteur électrique synchrone Mot1, des paramètres du deuxième moteur électrique synchrone Mot2, de la mesure des oscillations du courant statorique résultant, au premier ordre et au deuxième ordre, ces oscillations résultant de l'injection du signal de tension à haute fréquence selon un axe déterminé dans le repère fixe (a, b) lié au stator, il est ainsi possible de déterminer l'angle $\theta_1$ du rotor R1 du premier moteur électrique synchrone Mot1 et l'angle $\theta_2$ du rotor R2 du deuxième moteur électrique synchrone Mot2.

Les équations (10), (11) peuvent se résoudre de différentes manières. Une manière consiste par exemple à résoudre en premier la relation au premier ordre (relation en g-oscillation au premier ordre en F/$\Omega$) pour dégager plusieurs solutions et à sélectionner l'unique solution parmi les solutions déjà trouvées grâce à la relation au second ordre (relation en n-oscillation au deuxième ordre en F$^2$/$\Omega^2$).

Une fois les angles $\theta_1$, $\theta_2$ des deux rotors R1, R2 déterminés, le variateur de vitesse peut mettre en place une étape d'alignement des deux rotors R1, R2. Bien entendu, différentes stratégies peuvent être mises en place pour réaliser l'alignement des deux rotors. Ces stratégies sont par exemple mémorisées dans le variateur de vitesse et appliquées au choix de l'utilisateur. L'alignement peut par exemple s'effectuer en déplaçant le rotor de l'un des deux moteurs électriques synchrones pour l'aligner sur le rotor de l'autre moteur électrique synchrone. La stratégie employée peut également consister à déplacer les deux rotors vers une position médiane intermédiaire ou vers une position pondérée tenant compte de l'inertie de chaque moteur électrique synchrone ou des puissances mises en jeu.

Après avoir aligné les deux rotors R1, R2, le variateur de vitesse peut commander les deux moteurs électriques synchrones Mot1, Mot2 en employant une seule loi de commande et en envoyant les mêmes signaux de commande dans les deux moteurs électriques synchrones.

**Revendications**

1. Procédé de commande mis en oeuvre dans un convertisseur de puissance qui comporte une sortie connectée à deux moteurs électriques synchrones (Mot1, Mot2) à aimant permanent en parallèle, ledit convertisseur de puissance étant commandé pour appliquer une tension d'alimentation sur sa sortie, chaque moteur électrique synchrone à aimant permanent comportant un stator et un rotor (R1, R2), **caractérisé en ce qu'**il comporte :

- une étape d'application d'un signal de tension à haute fréquence, sans générer de couple, c'est-à-dire sans occasionner un déplacement de leur rotor, sur les moteurs électriques synchrones (Mot1, Mot2) à aimant permanent, selon au moins un axe dans un repère fixe (a, b), entraînant des oscillations du courant sur la sortie du convertisseur de puissance,
- une étape de mesure des oscillations du courant obtenues sur la sortie du convertisseur de puissance,
- une étape de détermination pour déterminer l'angle ($\theta_1$) du rotor (R1) du premier moteur électrique synchrone (Mot1) à aimant permanent et l'angle ($\theta_2$) du rotor (R2) du deuxième moteur électrique synchrone (Mot2) à aimant permanent à partir des oscillations du courant mesuré.

2.  Procédé selon la revendication 1, **caractérisé en ce que** l'étape de détermination de l'angle ($\theta_1$) du rotor (R1) du premier moteur électrique synchrone (Mot1) à aimant permanent est mise en oeuvre en tenant compte des paramètres du premier moteur électrique synchrone (Mot1) à aimant permanent.

3.  Procédé selon la revendication 1 ou 2, **caractérisé en ce que** l'étape de détermination de l'angle ($\theta_2$) du rotor (R2) du deuxième moteur électrique synchrone (Mot2) à aimant permanent est mise en oeuvre en tenant compte des paramètres du deuxième moteur électrique synchrone (Mot2) à aimant permanent.

4.  Procédé selon l'une des revendications 1 à 3, **caractérisé en ce que** l'angle ($\theta_1$) du rotor (R1) du premier moteur électrique synchrone (Mot1) à aimant permanent et l'angle ($\theta_2$) du rotor (R2) du deuxième moteur électrique synchrone (Mot2) à aimant permanent sont déterminés à partir des relations suivantes :

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2} + l_{mot2} \cdot e^{j\theta_2} + m_{mot2} \cdot e^{j3\theta_2}$$

dans lesquels :

$$g = \frac{\Omega \cdot \tilde{i}_s}{e^{j\alpha} \cdot \tilde{u}}$$

$$n = \frac{4 \cdot \Omega^2 \cdot \tilde{\tilde{i}}_s}{e^{j2\alpha} \cdot \tilde{u}_s^{\,2}}$$

- $g_{mot1}$, $h_{mot1}$, $k_{mot1}$, $l_{mot1}$, $m_{mot1}$ sont des constantes qui sont fonction des paramètres du premier moteur électrique synchrone à aimant permanent,
- $g_{mot2}$, $h_{mot2}$, $k_{mot2}$, $l_{mot2}$, $m_{mot2}$ sont des constantes qui sont fonction des paramètres du deuxième moteur électrique synchrone à aimant permanent,
- $\tilde{i}_s$ représente les oscillations du courant obtenues au premier ordre,
- $\tilde{\tilde{i}}_S$ représente les oscillations du courant obtenues au deuxième ordre,
- $\alpha$ représente l'angle formé par l'axe de l'injection dans le repère fixe,
- $\Omega$ représente la fréquence du signal de tension à haute fréquence qui est appliqué,
- $\tilde{u}$ représente l'amplitude de l'injection du signal de tension à haute fréquence et

- $\tilde{u}_S = e^{j\alpha} \cdot \tilde{u}$

5.  Procédé selon l'une des revendications 1 à 4, **caractérisé en ce qu'**il comporte une étape d'alignement des rotors (R1, R2) selon une stratégie déterminée, mémorisée dans le convertisseur de puissance.

6.  Procédé selon la revendication 5, **caractérisé en ce que** l'étape d'alignement est mise en oeuvre en tenant compte de l'inertie du premier moteur électrique synchrone (Mot1) à aimant permanent et de l'inertie du deuxième moteur électrique synchrone (Mot2) à aimant permanent.

**7.** Convertisseur de puissance comportant une sortie destinée à être connectée à deux moteurs électriques synchrones (Mot1, Mot2) à aimant permanent en parallèle, ledit convertisseur de puissance étant commandé pour appliquer une tension d'alimentation sur sa sortie, chaque moteur électrique synchrone (Mot1, Mot2) à aimant permanent comportant un stator et un rotor (R1, R2), **caractérisé en ce qu'**il comporte :

- des moyens d'application d'un signal de tension à haute fréquence, sans générer de couple, c'est-à-dire sans occasionner un déplacement de leur rotor, sur les deux moteurs électriques synchrones (Mot1, Mot2) à aimant permanent, selon au moins un axe dans un repère fixe, entraînant des oscillations du courant sur la sortie du convertisseur de puissance,
- des moyens de mesure des oscillations du courant obtenues sur la sortie du convertisseur de puissance,
- des moyens de détermination activés pour déterminer l'angle ($\theta_1$) du rotor (R1) du premier moteur électrique synchrone (Mot1) à aimant permanent et l'angle ($\theta_2$) du rotor (R2) du deuxième moteur électrique synchrone (Mot2) à aimant permanent à partir des oscillations du courant mesuré.

**8.** Convertisseur de puissance selon la revendication 7, **caractérisé en ce que** les moyens de détermination sont activés pour déterminer l'angle ($\theta_1$) du rotor du premier moteur électrique synchrone (Mot1) à aimant permanent en tenant compte des paramètres du premier moteur électrique synchrone à aimant permanent.

**9.** Convertisseur de puissance selon la revendication 7 ou 8, **caractérisé en ce que** les moyens de détermination sont activés pour déterminer l'angle ($\theta_2$) du rotor (R2) du deuxième moteur électrique synchrone (Mot2) à aimant permanent en tenant compte des paramètres du deuxième moteur électrique synchrone à aimant permanent.

**10.** Convertisseur de puissance selon l'une des revendications 7 à 9, **caractérisé en ce que** l'angle ($\theta_1$) du rotor (R1) du premier moteur électrique synchrone (Mot1) à aimant permanent et l'angle ($\theta_2$) du rotor (R2) du deuxième moteur électrique synchrone (Mot2) à aimant permanent sont déterminés à partir des relations suivantes :

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2} + l_{mot2} \cdot e^{j\theta_2} + m_{mot2} \cdot e^{j3\theta_2}$$

dans lesquels :

$$g = \frac{\Omega \cdot \tilde{i}_S}{e^{j\alpha} \cdot \tilde{u}}$$

$$n = \frac{4 \cdot \Omega^2 \cdot \tilde{\tilde{i}}_S}{e^{j2\alpha} \cdot \tilde{u}_S^{\,2}}$$

- $g_{mot1}$, $h_{mort1}$, $k_{mot1}$, $l_{mot1}$, $m_{mot1}$ sont des constantes qui sont fonction des paramètres du premier moteur électrique synchrone à aimant permanent,
- $g_{mot2}$, $h_{mot2}$, $k_{mot2}$, $l_{mot2}$, $m_{mot2}$ sont des constantes qui sont fonction des paramètres du deuxième moteur électrique synchrone à aimant permanent,
- $\tilde{i}_S$ représente les oscillations du courant obtenues au premier ordre,
- $\tilde{\tilde{i}}_S$ représente les oscillations du courant obtenues au deuxième ordre,
- $\alpha$ représente l'angle formé par l'axe de l'injection dans le repère fixe,
- $\Omega$ représente la fréquence du signal de tension à haute fréquence qui est appliqué,
- $\tilde{u}$ représente l'amplitude de l'injection du signal de tension à haute fréquence et
- $\tilde{u}_S = e^{j\alpha} \cdot \tilde{u}$

**11.** Convertisseur de puissance selon l'une des revendications 7 à 10, **caractérisé en ce qu'**il comporte des moyens d'alignement des rotors selon une stratégie déterminée mémorisée dans le convertisseur de puissance.

12. Convertisseur de puissance selon la revendication 11, **caractérisé en ce que** les moyens d'alignement comportent des moyens de détermination d'une stratégie d'alignement tenant compte de l'inertie du premier moteur électrique synchrone à aimant permanent et de l'inertie du deuxième moteur électrique synchrone à aimant permanent.

**Patentansprüche**

1. Steuerungsverfahren, das in einem Leistungswandler eingesetzt wird, der einen mit zwei parallelgeschalteten elektrischen Permanentmagnet-Synchronmotoren (Mot1, Mot2) verbundenen Ausgang umfasst, wobei der Leistungswandler gesteuert wird, um eine Versorgungsspannung an seinen Ausgang anzulegen, wobei jeder elektrische Permanentmagnet-Synchronmotor einen Stator und einen Rotor (R1, R2) umfasst, **dadurch gekennzeichnet, dass** es umfasst:

   - einen Schritt des Anlegens eines hochfrequenten Spannungssignals, ohne Drehmoment zu erzeugen, d. h. ohne eine Bewegung ihres Rotors zu verursachen, an die elektrischen Permanentmagnet-Synchronmotoren (Mot1, Mot2) entlang mindestens einer Achse in einem festen Koordinatensystem (a, b), das zu Schwingungen des Stroms am Ausgang des Leistungswandlers führt,
   - einen Schritt des Messens der am Ausgang des Leistungswandlers erhaltenen Schwingungen des Stroms,
   - einen Schritt des Bestimmens, um den Winkel ($\theta_1$) des Rotors (R1) des ersten elektrischen Permanentmagnet-Synchronmotors (Mot1) und den Winkel ($\theta_2$) des Rotors (R2) des zweiten elektrischen Permanentmagnet-Synchronmotors (Mot2) ausgehend von den Schwingungen des gemessenen Stroms zu bestimmen.

2. Verfahren nach Anspruch 1, **dadurch gekennzeichnet, dass** der Schritt des Bestimmens des Winkels ($\theta_1$) des Rotors (R1) des ersten elektrischen Permanentmagnet-Synchronmotors (Mot1) unter Berücksichtigung der Parameter des ersten elektrischen Permanentmagnet-Synchronmotors (Mot1) ausgeführt wird.

3. Verfahren nach Anspruch 1 oder 2, **dadurch gekennzeichnet, dass** der Schritt des Bestimmens des Winkels ($\theta_2$) des Rotors (R2) des zweiten elektrischen Permanentmagnet-Synchronmotors (Mot2) unter Berücksichtigung der Parameter des zweiten elektrischen Permanentmagnet-Synchronmotors (Mot2) ausgeführt wird.

4. Verfahren nach einem der Ansprüche 1 bis 3, **dadurch gekennzeichnet, dass** der Winkel ($\theta_1$) des Rotors (R1) des ersten elektrischen Permanentmagnet-Synchronmotors (Mot1) und der Winkel ($\theta_2$) des Rotors (R2) des zweiten elektrischen Permanentmagnet-Synchronmotors (Mot2) ausgehend von den folgenden Gleichungen bestimmt werden:

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2} + l_{mot2} \cdot e^{j\theta_2} + m_{mot2} \cdot e^{j3\theta_2}$$

in denen:

$$g = \frac{\Omega \cdot \widetilde{\imath}_S}{e^{j\alpha} \cdot \widetilde{u}}$$

$$n = \frac{4 \cdot \Omega^2 \cdot \widetilde{\widetilde{\imath}}_S}{e^{j2\alpha} \cdot \widetilde{u}_S^2}$$

   - $g_{mot1}$, $h_{mot1}$, $k_{mot1}$, $l_{mot1}$, $m_{mot1}$ Konstanten sind, die von den Parametern des ersten elektrischen Permanentmagnet-Synchronmotors abhängig sind,
   - $g_{mot2}$, $h_{mot2}$, $k_{mot2}$, $l_{mot2}$, $m_{mot2}$ Konstanten sind, die von den Parametern des zweiten elektrischen Permanentmagnet-Synchronmotors abhängig sind,
   - $\widetilde{\imath}_S$ die erhaltenen Schwingungen des Stroms erster Ordnung darstellt,

- $\widetilde{\widetilde{i}}_S$ die erhaltenen Schwingungen des Stroms zweiter Ordnung darstellt,
- $\alpha$ den Winkel darstellt, der von der Einspeisungsachse im festen Koordinatensystem gebildet wird,
- $\Omega$ die Frequenz des angelegten hochfrequenten Spannungssignals darstellt,
- $\tilde{u}$ die Amplitude der Einspeisung des hochfrequenten Spannungssignals darstellt und
- $\tilde{u}_S = e^{j\alpha} \cdot \tilde{u}$

5. Verfahren nach einem der Ansprüche 1 bis 4, **dadurch gekennzeichnet, dass** es einen Schritt des Ausrichtens der Rotoren (R1, R2) nach einer bestimmten Strategie umfasst, die im Leistungswandler gespeichert ist.

6. Verfahren nach Anspruch 5, **dadurch gekennzeichnet, dass** der Schritt des Ausrichtens unter Berücksichtigung der Trägheit des ersten elektrischen Permanentmagnet-Synchronmotors (Mot1) und der Trägheit des zweiten elektrischen Permanentmagnet-Synchronmotor (Mot2) ausgeführt wird.

7. Leistungswandler mit einem Ausgang, der dazu bestimmt ist, mit zwei parallelgeschalteten elektrischen Permanentmagnet-Synchronmotoren (Mot1, Mot2) verbunden zu werden, wobei der Leistungswandler gesteuert wird, um eine Versorgungsspannung an seinen Ausgang anzulegen, wobei jeder elektrische Permanentmagnet-Synchronmotor (Mot1, Mot2) einen Stator und einen Rotor (R1, R2) umfasst, **dadurch gekennzeichnet, dass** er umfasst:

   - Mittel zum Anlegen eines hochfrequenten Spannungssignals, ohne Drehmoment zu erzeugen, d. h. ohne eine Bewegung ihres Rotors zu verursachen, an die elektrischen Permanentmagnet-Synchronmotoren (Mot1, Mot2) entlang mindestens einer Achse in einem festen Koordinatensystem, das zu Schwingungen des Stroms am Ausgang des Leistungswandlers führt,
   - Mittel zum Messen der am Ausgang des Leistungswandlers erhaltenen Schwingungen des Stroms,
   - Mittel zum Bestimmen, die aktiviert werden, um den Winkel ($\theta_1$) des Rotors (R1) des ersten elektrischen Permanentmagnet-Synchronmotors (Mot1) und den Winkel ($\theta_2$) des Rotors (R2) des zweiten elektrischen Permanentmagnet-Synchronmotors (Mot2) ausgehend von den Schwingungen des gemessenen Stroms zu bestimmen.

8. Leistungswandler nach Anspruch 7, **dadurch gekennzeichnet, dass** die Mittel zum Bestimmen aktiviert werden, um den Winkel ($\theta_1$) des Rotors des ersten elektrischen Permanentmagnet-Synchronmotors (Mot1) unter Berücksichtigung der Parameter des ersten elektrischen Permanentmagnet-Synchronmotors zu bestimmen.

9. Leistungswandler nach Anspruch 7 oder 8, **dadurch gekennzeichnet, dass** die Mittel zum Bestimmen aktiviert werden, um den Winkel ($\theta_2$) des Rotors (R2) des zweiten elektrischen Permanentmagnet-Synchronmotors (Mot2) unter Berücksichtigung der Parameter des zweiten elektrischen Permanentmagnet-Synchronmotors zu bestimmen.

10. Leistungswandler nach einem der Ansprüche 7 bis 9, **dadurch gekennzeichnet, dass** der Winkel ($\theta_1$) des Rotors (R1) des ersten elektrischen Permanentmagnet-Synchronmotors (Mot1) und der Winkel ($\theta_2$) des Rotors (R2) des zweiten elektrischen Permanentmagnet-Synchronmotors (Mot2) ausgehend von den folgenden Gleichungen bestimmt werden:

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2} + l_{mot2} \cdot e^{j\theta_2} + m_{mot2} \cdot e^{j3\theta_2}$$

in denen:

$$g = \frac{\Omega \cdot \widetilde{i_S}}{e^{j\alpha} \cdot \tilde{u}}$$

$$n = \frac{4 \cdot \Omega^2 \cdot \widetilde{\widetilde{\iota}}_S}{e^{j2\alpha} \cdot \widetilde{u}_S^2}$$

- $g_{mot1}$, $h_{mot1}$, $k_{mot1}$, $l_{mot1}$, $m_{mot1}$ Konstanten sind, die von den Parametern des ersten elektrischen Permanentmagnet-Synchronmotors abhängig sind,
- $g_{mot2}$, $h_{mot2}$, $k_{mot2}$, $l_{mot2}$, $m_{mot2}$ Konstanten sind, die von den Parametern des zweiten elektrischen Permanentmagnet-Synchronmotors abhängig sind,
- $\widetilde{\iota}_S$ die erhaltenen Schwingungen des Stroms erster Ordnung darstellt,
- $\widetilde{\widetilde{\iota}}_S$ die erhaltenen Schwingungen des Stroms zweiter Ordnung darstellt,
- $\alpha$ den Winkel darstellt, der von der Einspeisungsachse im festen Koordinatensystem gebildet wird,
- $\Omega$ die Frequenz des angelegten hochfrequenten Spannungssignals darstellt,
- $\widetilde{u}$ die Amplitude der Einspeisung des hochfrequenten Spannungssignals darstellt und
- $\widetilde{u}_S = e^{j\alpha} \cdot \widetilde{u}$

11. Leistungswandler nach einem der Ansprüche 7 bis 10, **dadurch gekennzeichnet, dass** er Mittel zum Ausrichten der Rotoren nach einer bestimmten Strategie umfasst, die im Leistungswandler gespeichert ist.

12. Leistungswandler nach Anspruch 11, **dadurch gekennzeichnet, dass** die Mittel zum Ausrichten Mittel zum Bestimmen einer Ausrichtungsstrategie unter Berücksichtigung der Trägheit des ersten elektrischen Permanentmagnet-Synchronmotors und der Trägheit des zweiten elektrischen Permanentmagnet-Synchronmotor umfassen.

**Claims**

1. A control method implemented in a power converter which comprises an output connected to two permanent-magnet synchronous electric motors (Mot1, Mot2) in parallel, said power converter being controlled in order to apply a supply voltage to its output, each permanent-magnet synchronous electric motor comprising a stator and a rotor (R1, R2), **characterized in that** it comprises:

   - a step of applying a high-frequency voltage signal, without generating torque, that is to say without causing displacement of their rotor, to the permanent-magnet synchronous electric motors (Mot1, Mot2), along at least one axis in a fixed reference frame (a, b), leading to oscillations of the current at the output of the power converter,
   - a step of measuring the current oscillations obtained at the output of the power converter,
   - a determination step for determining the angle ($\theta_1$) of the rotor (R1) of the first permanent-magnet synchronous electric motor (Mot1) and the angle ($\theta_2$) of the rotor (R2) of the second permanent-magnet synchronous electric motor (Mot2) on the basis of the oscillations of the measured current.

2. The method as claimed in claim 1, **characterized in that** the step of determining the angle ($\theta_1$) of the rotor (R1) of the first permanent-magnet synchronous electric motor (Mot1) is carried out while taking into account the parameters of the first permanent-magnet synchronous electric motor (Mot1).

3. The method as claimed in claim 1 or 2, **characterized in that** the step of determining the angle ($\theta_2$) of the rotor (R2) of the second permanent-magnet synchronous electric motor (Mot2) is carried out while taking into account the parameters of the second permanent-magnet synchronous electric motor (Mot2).

4. The method as claimed in one of claims 1 to 3, **characterized in that** the angle ($\theta_1$) of the rotor (R1) of the first permanent-magnet synchronous electric motor (Mot1) and the angle ($\theta_2$) of the rotor (R2) of the second permanent-magnet synchronous electric motor (Mot2) are determined on the basis of the following relations:

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2}$$
$$+ l_{mot2} \cdot e^{j\theta_2} + m_{mot2} \cdot e^{j3\theta_2}$$

in which:

$$g = \frac{\Omega \cdot \tilde{i}_s}{e^{j\alpha} \cdot \tilde{u}}$$

$$n = \frac{4 \cdot \Omega^2 \cdot \tilde{\tilde{i}}_s}{e^{j2\alpha} \cdot \tilde{u}_s^{\,2}}$$

- $g_{mot1}$, $h_{mot1}$, $k_{mot1}$, $m_{mot1}$ are constants which depend on the parameters of the first permanent-magnet synchronous electric motor,
- $g_{mot2}$, $h_{mot2}$, $k_{mot2}$, $m_{mot2}$ are constants which depend on the parameters of the second permanent-magnet synchronous electric motor,
- $\tilde{i}_S$ represents the first-order current oscillations obtained,
- $\tilde{\tilde{i}}_S$ represents the second-order current oscillations obtained,
- $\alpha$ represents the angle formed by the axis of the injection in the fixed reference frame,
- $\Omega$ represents the frequency of the high-frequency voltage signal which is applied,
- $\tilde{u}$ represents the amplitude of the injection of the high-frequency voltage signal, and
- $u_S = e^{j\alpha} \cdot \tilde{u}$.

5. The method as claimed in one of claims 1 to 4, **characterized in that** it comprises a step of aligning the rotors (R1, R2) according to a determined strategy, which is stored in the power converter.

6. The method as claimed in claim 5, **characterized in that** the alignment step is carried out while taking into account the inertia of the first permanent-magnet synchronous electric motor (Mot1) and the inertia of the second permanent-magnet synchronous electric motor (Mot2).

7. A power converter comprising an output intended to be connected to two permanent-magnet synchronous electric motors (Mot1, Mot2) in parallel, said power converter being controlled in order to apply a supply voltage to its output, each permanent-magnet synchronous electric motor (Mot1, Mot2) comprising a stator and a rotor (R1, R2), **characterized in that** it comprises:

- means for applying a high-frequency voltage signal, without generating torque, that is to say without causing displacement of their rotor, to the permanent-magnet synchronous electric motors (Mot1, Mot2), along at least one axis in a fixed reference frame, leading to oscillations of the current at the output of the power converter,
- means for measuring the current oscillations obtained at the output of the power converter,
- determination means activated in order to determine the angle ($\theta_1$) of the rotor (R1) of the first permanent-magnet synchronous electric motor (Mot1) and the angle ($\theta_2$) of the rotor (R2) of the second permanent-magnet synchronous electric motor (Mot2) on the basis of the oscillations of the measured current.

8. The power converter as claimed in claim 7, **characterized in that** the determination means are activated in order to determine the angle ($\theta_1$) of the rotor of the first permanent-magnet synchronous electric motor (Mot1) while taking into account the parameters of the first permanent-magnet synchronous electric motor (Mot1).

9. The power converter as claimed in claim 7 or 8, **characterized in that** the determination means are activated in order to determine the angle ($\theta_2$) of the rotor (R2) of the second permanent-magnet synchronous electric motor (Mot2) while taking into account the parameters of the second permanent-magnet synchronous electric motor.

10. The power converter as claimed in one of claims 7 to 9, **characterized in that** the angle ($\theta_1$) of the rotor (R1) of the first permanent-magnet synchronous electric motor (Mot1) and the angle ($\theta_2$) of the rotor (R2) of the second permanent-magnet synchronous electric motor (Mot2) are determined on the basis of the following relations:

$$g = g_{mot1} + h_{mot1} \cdot e^{j2\theta_1} + g_{mot2} + h_{mot2} \cdot e^{j2\theta_2}$$

$$n = k_{mot1} \cdot e^{-j\theta_1} + l_{mot1} \cdot e^{j\theta_1} + m_{mot1} \cdot e^{j3\theta_1} + k_{mot2} \cdot e^{-j\theta_2}$$
$$+ l_{mot2} \cdot e^{j\theta_2} + m_{mot2} \cdot e^{j3\theta_2}$$

in which:

$$g = \frac{\Omega \cdot \tilde{i}_s}{e^{j\alpha} \cdot \tilde{u}}$$

$$n = \frac{4 \cdot \Omega^2 \cdot \tilde{\tilde{i}}_s}{e^{j2\alpha} \cdot \tilde{u}_s^{\,2}}$$

- $g_{mot1}$, $h_{mot1}$, $k_{mot1}$, $m_{mot1}$ are constants which depend on the parameters of the first permanent-magnet synchronous electric motor,
- $g_{mot2}$, $h_{mot2}$, $k_{mot2}$, $m_{mot2}$ are constants which depend on the parameters of the second permanent-magnet synchronous electric motor,
- $\tilde{i}_s$ represents the first-order current oscillations obtained,
- $\tilde{\tilde{i}}_s$ represents the second-order current oscillations obtained,
- $\alpha$ represents the angle formed by the axis of the injection in the fixed reference frame,
- $\Omega$ represents the frequency of the high-frequency voltage signal which is applied,
- $\tilde{u}$ represents the amplitude of the injection of the high-frequency voltage signal, and
- $\tilde{u}_s = e^{j\alpha} \cdot \tilde{u}$.

11. The power converter as claimed in one of claims 7 to 10, **characterized in that** it comprises means for aligning the rotors according to a determined strategy, which is stored in the power converter.

12. The power converter as claimed in claim 11, **characterized in that** the alignment means comprise means for determining an alignment strategy taking into account the inertia of the first permanent-magnet synchronous electric motor and the inertia of the second permanent-magnet synchronous electric motor.

**Fig. 1**

**EP 2 803 135 B1**

## RÉFÉRENCES CITÉES DANS LA DESCRIPTION

**Documents brevets cités dans la description**

*   JP 2008206290 B